(19) Europäisches Patentamt / European Patent Office / Office européen des brevets

(11) EP 3 779 869 A1

(12) EUROPEAN PATENT APPLICATION

(43) Date of publication:
**17.02.2021 Bulletin 2021/07**

(51) Int Cl.:
*G06T 7/00* (2017.01)

(21) Application number: **19306016.7**

(22) Date of filing: **14.08.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Metso Minerals Oy**
**33101 Tampere (FI)**

(72) Inventor: **Guyot, Olivier**
**74800 Etaux (FR)**

(74) Representative: **Hoffmann Eitle**
**Patent- und Rechtsanwälte PartmbB**
**Arabellastraße 30**
**81925 München (DE)**

(54) **A COMPUTER-IMPLEMENTED METHOD, SERVER, AND TERMINAL DEVICE FOR DETERMINING A ROCK SIZE DISTRIBUTION OF A SAMPLE OF ROCKS**

(57) The present invention relates to a computer-implemented method, a server, a terminal device, a computer program, and a computer-readable storage medium for determining a rock size distribution. The computer-implemented method comprises acquiring, from a camera, an image of a sample of rocks; using a neural network algorithm for the image to extract a rock mask for each rock present in the image, each rock mask indicating at least one contour; and determining a rock size distribution of the sample using a physical scale being associated with the image. In this matter, it is possible to automatically determine a rock size distribution of a sample of rocks in order to simplify and improve a selection process for selecting machines and/or setting machine parameters suitable for further processing or machine settings, while speeding up the selection process and decreasing the error rate.

141
140
210
220
100
110
120

Fig. 2A

EP 3 779 869 A1

## Description

### TECHNICAL FIELD

The present invention relates to a computer-implemented method, a server, a terminal device, a computer program, and a computer-readable storage medium for determining a rock size distribution of a sample of rocks. In particular, the present invention relates to an automatic determination of a rock size distribution from an image of a sample of rocks using machine learning.

### BACKGROUND OF THE INVENTION

In the field of mining and aggregation, equipment and services to process rocks are often in great demand. For example, crushing or grinding machines are provided in the field of mining in order to refine and further process rocks. In this matter, it is often very important to know a rock size distribution of a sample of rocks to be further processed or of a sample of rocks coming out of a crushing/grinding machine in order to optimize the process itself or to optimize the selection of configuration parameters for tuning crushing/grinding machines or of tools for crushing/ grinding rocks. For example, down a processing line, many different tools and machines may be used to separate rocks and to refine ore and minerals.

Up to now, in order to obtain the rock size distribution of a sample of crushed rocks, the sample of crushed rocks has to be sent to, for example, a laboratory, wherein the sample of crushed rocks is a representative for, for example, the crushed product. At the laboratory, the sample of crushed rocks is analysed to obtain the rock size distribution. One option to analyse the sample of crushed rocks is using sieves of specific sizes to separate the rocks of different sizes present in the sample of crushed rocks. If, for example, a sieve with a specific mesh size is selected, all the rocks having larger dimensions than the mesh of the sieve are hold back by the sieve, while rocks having smaller dimensions fall through the sieve. Thus, the sample of rocks can be divided into groups of rocks, the groups of rocks being distinguishable depending on the rock size, and the rock size distribution is obtained. For sieving, sieving machines may be used which may contain tubes or trays of sieves, wherein several sieves with different mesh sizes are located on top of each other to form a tube or a stack of trays. Thus, with this tube of sieves or with this stack of trays, a sample of rocks can be divided into groups of rocks depending on the rock size to obtain the rock size distribution.

A problem is, however, that sending a sample of rocks to a laboratory for analysing the sample of rocks and for obtaining the rock size distribution is laborious and time consuming. If, however, the step of sending a sample of rocks to a laboratory to obtain the rock size distribution is skipped, the rock size distribution of the sample of rocks is not known and thus it is impossible to know if a product of crushed rocks is as desired.

In addition, not only a sample of crushed rocks may be analysed to obtain the rock size distribution but also a sample of rocks before being crushed or ground. When knowing the rock size distribution of a sample of rocks before starting a crushing or grinding process, the correct configuration parameters can be set in the crushing/grinding machine to correctly tune the crushing/grinding machine. In this matter, configuration parameters are, for example, the speed of crushing the rocks, the crushing force applied to the rocks, the crushing duration indicating how long the rocks are crushed, and the like. Again, the rock size distribution before a crushing or grinding process may be determined in a laboratory which is laborious and time consuming. However, if a rock size distribution is not determined, it is highly difficult to select an appropriate configuration of a crushing or grinding machine corresponding to the rock size distribution of the sample of rocks for further processing. When the rock size distribution is known it can be avoided that the configuration of a machine for further processing of a sample of rocks has to be adapted several times until the correct configuration of the machine is found.

This conventional system for determining rock size distributions necessarily consumes resources and takes time. In addition, there is a high risk that the wrong machine setting not corresponding to the rock size distribution of the sample of rocks is selected. Thus, the determination of rock size distributions and the tuning process for finding the parameter configuration of the machine corresponding to a particular sample of rocks may be time consuming, complicated, and laborious. In addition, the tuning process are prone to mistakes.

The aim of the present invention is to solve the technical problem concerning the rock size distribution determination and the tuning process of configuring a crushing or grinding machine for crushing or grinding a sample of rocks having a specific rock size distribution. In particular, the present invention proposes a computer-implemented method, a server, a terminal device, a computer program, and a computer-readable storage medium for automatically determining a rock size distribution of a sample of rocks in order to simplify and improve the tuning process for correctly tuning a crushing/grinding machine suitable for further processing, while speeding up the rock size distribution determination and tuning process and decreasing the error rate.

## SUMMARY OF THE INVENTION

It is desired to provide means for an improved and simplified way of determining a rock size distribution which may subsequently be used in a crushing process suitable for further processing of a sample of rocks. In addition, it is desired to speed up the determination of a rock size distribution and/or crushing process, while decreasing the error rate for determining a rock size distribution and thus decreasing the error rate in selecting the machine condition/configuration corresponding to the sample of rocks.

At least some of the mentioned objects and drawbacks are solved by the subject matter of the independent claims. Further preferred embodiments are defined in the dependent claims.

According to one aspect of the present invention, a computer-implemented method of determining a rock size distribution comprises acquiring, from a camera, an image of a sample of rocks; using a neural network algorithm for the image to extract a rock mask for each rock present in the image, each rock mask indicating at least one contour; and determining a rock size distribution of the sample using a physical scale being associated with the image.

According to another aspect of the present invention, a server for determining a rock size distribution comprises an acquisition unit configured to acquire, from a camera, an image of a sample of rocks; a processor configured to use a neural network algorithm for the image to extract a rock mask for each rock present in the image, each rock mask indicating at least one contour; and a determining unit configured to determine a rock size distribution of the sample using a physical scale being associated with the image.

According to another aspect of the present invention, a terminal device for determining a rock size distribution comprises an acquisition unit configured to acquire, from a camera of the terminal device, an image of a sample of rocks; a processor configured to use a neural network algorithm for the image to extract a rock mask for each rock present in the image, each rock mask indicating at least one contour; and a determining unit configured to determine a rock size distribution of the sample using a physical scale being associated with the image.

According to another aspect of the present invention, a computer program for determining a rock size distribution comprises instructions which, when the program is executed by a computer, cause the computer to carry out the computer-implemented method. According to another aspect of the present invention, a signal is provided carrying the computer program.

According to another aspect of the present invention, a computer-readable storage medium for determining a rock size distribution comprises instructions which, when executed by a computer, cause the computer to carry out the computer-implemented method.

Further advantageous features of the invention are disclosed in the claims.

## BRIEF DESCRIPTION OF THE DRAWINGS

FIG. 1A is an illustration of an exemplary working station in mining.
FIG. 1B is an illustration of a tube of sieves.
FIG. 2A is an illustration of an exemplary working station in mining according to the present invention.
FIG. 2B is an illustration of a terminal device according to an embodiment of the present invention.
FIG. 3 is an illustration of an interaction of a terminal device with a server according to an embodiment of the present invention.
FIG. 4 is an illustration of a terminal device according to an embodiment of the present invention.
FIG. 5 is an illustration of a rock mask of a rock in the sample of rocks.
FIG. 6 is an illustration of a server according to an embodiment of the present invention.
FIG. 7 shows a flowchart illustrating a method for determining a rock size distribution according to an embodiment of the present invention.
FIGs. 8A, 8B, and 8C show an example of an erroneous rock mask.
FIGs. 9A, 9B, and 9C show another example of an erroneous rock mask.
FIGs. 10A, 10B, and 10C show flowcharts illustration a method for determining a rock size distribution according to an embodiment of the present invention.
FIGs. 11A, 11B, 11C, and 11D show examples of finding a longest axis and two perpendicular axes from the contours found in a rock mask.
FIG. 12A is an illustration of an exemplary rock size distribution graph.
FIG. 12B is an illustration of exemplary rock size distribution graphs corresponding to a sample of rocks before a crushing process and to the sample of rocks after the crushing process.
FIG. 13 shows a flowchart describing the automatic configuration of a crushing/grinding machine.
FIGs. 14A and 14B show examples of a scaling map according to an embodiment of the present invention.

## DETAILED DESCRIPTION

Preferred embodiments of the invention are described with reference to the figures. It is noted that the following description contains examples only and should not be construed as limiting the invention. In the following, similar or same reference signs indicate similar or same elements or functions.

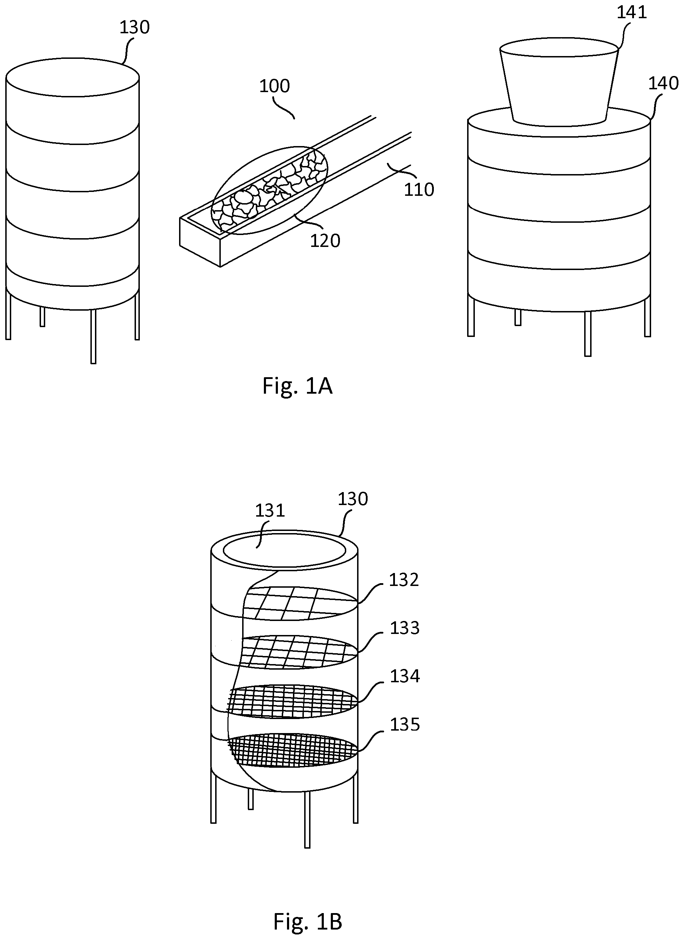

FIG. 1A is an illustration of an exemplary working station 100 for mining. For the working station 100, a conveyor belt 110 transporting a sample of rocks 120 is shown. The sample of rocks 120 comprises a plurality of rocks with different sizes. Thus, the sample of rocks has a specific rock size distribution.

The working station 100 further comprises machines 130 and 140 for further processing of the sample of rocks 120. The working station 100 is not limited to two machines 130 and 140, but the working station 100 may also comprise more than two machines or a single machine. The machines 130 and 140 may be sieving machines for sieving the sample of rocks 120 or may be crushing/grinding machines for crushing or grinding the sample of rocks. Machines 130 may be laboratory machine and may be located in a laboratory instead of being located in a working station 100 next to the conveyor belt 110.

FIG. 1B shows more details of, for example, machine 130 with is a sieving machine in this example. The machine 130 comprises a sieving tube which is a tube of several sieves, for example four sieves 132 to 135, located on top of each other in the machine 130. The machine 130 has an opening 131 through which the sample of rocks 120 is inserted into the machine 130. The sieves 132 to 135 have different mesh sizes and are arranged as a tube, wherein the sieve 132 with the largest meshes compared to the other sieves 133 to 135 in the machine 130 is allocated the closest to the opening 131, the sieve 133 with smaller meshes compared to sieve 132 is allocated behind sieve 132, the sieve 134 with smaller meshes compared to sieve 133 is allocated behind sieve 133, and the sieve 135 with smaller meshes compared to sieve 134 is allocated behind sieve 134. Thus, the sieves 132 to 135 are arranged in decreasing mesh size order from the opening 131 of the machine 130. Therefore, it is possible sieving the sample of rocks 120 input in the machine 130, wherein the rocks with sizes greater than the mesh size of a sieve are hold back by the respective sieve. The result is that the sample of rocks 120 is divided into groups of rocks, the groups of rocks being divided by the rock size, in order to determine the rock size distribution. Machine 130 is not limited to the example given in FIG. 1B and machine 130 may contain more or less sieves or more contain trays of sieves instead of tubes of sieves.

Machine 140 may be a crushing or grinding machine having an opening 141. The sample of rocks 120 may be transported, e.g. by a transporting system, dredgers, or the like, from the conveyor belt 110 to the crushing machine 140 and may be thrown into the crushing machine 140 using the opening 141. Then the crushing machine 140 may crush the sample of rocks 120 depending on the configuration parameters set in the crushing machine 140. The aim is to obtain a crushed sample of rocks with desired rock sizes (a desired rock size distribution).

In working station 100, as also explained above, the sample of rocks 120 may be put into the sieving machine 130 before or after crushing to determine the rock size distribution of the sample of rocks 120. The sample of rocks 120 is then sieved in order to obtain the rock size distribution. Once the rock size distribution is known, it can be determined whether a product of crushed rocks has a desired rock size distribution and the product of crushed rocks can be, for example, discarded, if the product of crushed rocks has a rock size distribution not desired. In addition, if a crushing/grinding process has not been performed yet, the crushing machine 140 can be correctly tuned with regard to the rock size distribution of a sample of rocks to be crushed in order to avoid discarding a product of crushed rocks later or wasting time due to a crushing process with wrongly tuned crushing machines. A technical problem is, however, that analysing the sample of rocks 120 with sieving machines, like sieving machine 130, is time consuming and laborious. If, however, the proper rock size distribution of the sample 120 entering a machine 140 is unknown, machine and/or machine conditions (configuration parameters, etc.) have to be selected by trial and error. If a machine and/or a machine condition is selected which does not correspond to the rock size distribution of the sample 120, the sample of rocks 120 are wrongly crushed and may have to be discarded. If, for example for the crushing process, the crushing machine has been tuned with inappropriate parameter configuration, the rocks in a sample of rocks may have been crushed too long or with too much force resulting in too small rock sizes compared to the desired rock sizes. This may lead to waste of resources and time.

Thus, it is highly difficult to easily and quickly determine a rock size distribution without much labour and/or select the correct machine condition/configuration corresponding to the actual rock size distribution in the sample of rocks for further processing. This leads to a cumbersome, time consuming, complicated, and laborious sieving process and/or to a cumbersome, time consuming, complicated, and laborious tuning process for a crushing/grinding machine. In addition, the tuning process for tuning or configuring a crushing/grinding machine is prone to mistakes when selecting the corresponding machines and/or machine conditions/configurations for further processing. If the crushing/grinding machine is wrongly tuned/configured, it may lead to an increase waste of resources and time, as the wrongly crushed sample of rocks has to be disposed and the crushing process has to be repeated for a new sample of rocks.

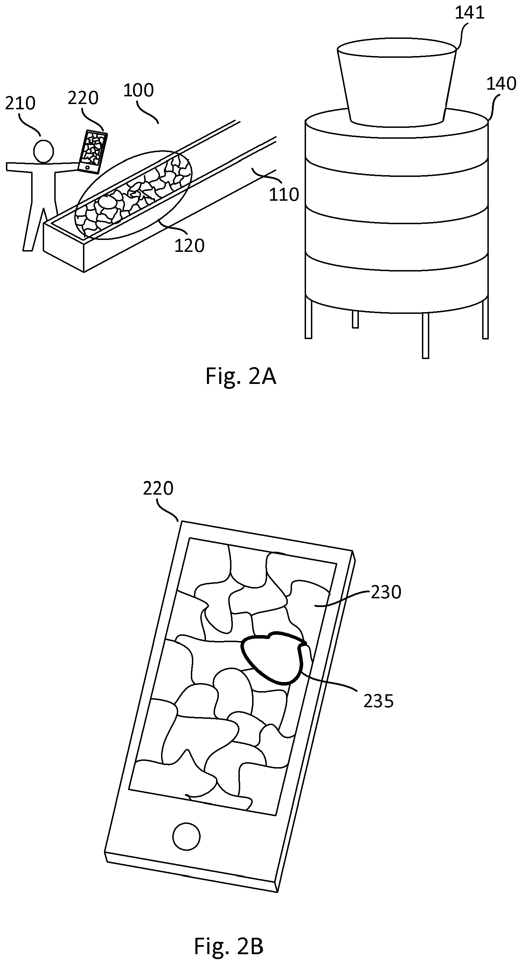

In order to solve the problems as stated above with regard to the sieving or crushing process, FIG. 2A shows a working station 100 according to an embodiment of the present invention, wherein the working station 200 again shows the conveyor belt 110, the sample of rocks 120, and the machine 140 which may be a s crushing/grinding machine as explained above. As the conveyor belt 110, the sample of rocks 120, and the machine 140 are similar to the ones shown in FIG. 1A, a detailed description is omitted at this point for conciseness reasons.

FIG. 2A furthermore shows a mine worker 210 which holds a terminal device 220 in his hands. The terminal device 220 may be any user device containing a camera, like a cell phone, a tablet, or any other hand-held device with a camera. However, the terminal device 220 is not limited to hand-held devices and may also be a device comprising a fixed or stationary camera or being connected to a fixed or stationary camera, or any other device being able to capture images. If a stationary camera is used, the camera may be located next to the conveyor belt 110 facing the sample of rocks being transported on the conveyor belt 110. In order to improve the determination of the rock size distribution or the tuning process of the corresponding machine based on the rock size distribution of the sample of rocks 120, the mine worker 210 takes or acquires a picture of the sample of rocks 120 before the sample of rocks 120 is carried to machine 140. As shown in FIG. 2B, the camera of terminal device 220 takes an image 230 of the sample of rocks 120, wherein the image 230 shows a plurality of rocks 235 in the sample of rocks 120. From this image 230, the rock size distribution is determined (as will be further explained below) and is output as a result to, for example, the mine worker or directly to a crushing machine 140, such that the mine worker is able to manually tune the crushing machine to correctly crush the rocks according to an intended (crushed) rock distribution. If the result is directly output to the crushing machine 140, the crushing machine 140 may be able to automatically set its parameters, like speed of crushing the rocks, crushing force applied to the rocks, crushing duration indicating how long the rocks are crushed, or the like. As a result, the tuning process for tuning or configuring the crushing machine or setting the machine condition may be improved and accelerated on the basis of the simplified way of determining a rock size distribution (described below), while the identification error of the rock size distribution is reduced and therefore also an error rate for tuning a machine may be decreased. In addition, by correctly tuning a crushing machine, waste of resources and time can be avoided. As can be seen in FIG. 2A, no sieving machine 130, explained in FIGs. 1A and 1B, is needed to determine the rock size distribution, leading to an improved determination of rock size distributions.

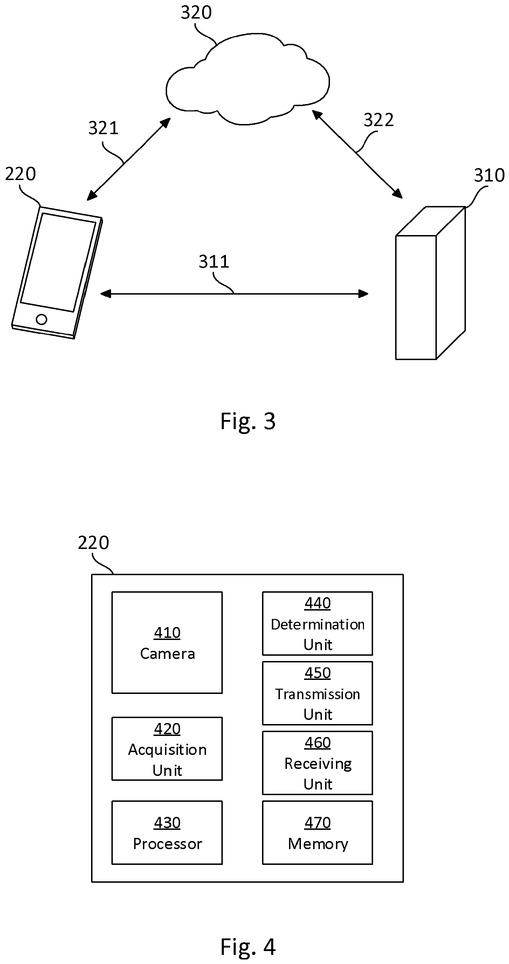

FIG. 3 shows an interaction of the terminal device 220 with a server 310. After having taken or acquired the image 230 of the sample of rocks 120 by the terminal device 220, the terminal device 220 may transmit the image 230 to the server 310 over a wired or wireless link 311. For example, the terminal device 220 and the server 310 are connected over any communication network that allows data transmission between the terminal device 220 and the server 310. After having acquired the image 230 from the terminal device 220, the server 310 may determine the rock size distribution of the sample of rocks 120 from the image 230 and may transmit the result back to the terminal device 220 which may display the result to the mine worker 210 operating the terminal device 220. Based on the displayed result, the mine worker 210 may know if a product of crushed rocks has the intended or correct rock size distribution or may tune the corresponding crushing machine 140 for further processing of a sample of rocks 120 not yet crushed. Instead of or additionally to the displaying of the result to the mine worker 210, the result may be directly output to the crushing machine 140, such that the crushing machine 140 can automatically set its configuration parameters depending on the intended crushed rock size distribution of the sample of rocks 120 to be crushed.

Another option is that the terminal device 220 does not transmit the image 230 directly to the server 311 over the wired or wireless link 311 but transmits the image 230 first to a cloud 320 over a link 321. Again, the terminal device 220 may transmit the image 230 to the cloud 320 using any communication network allowing data transmission between the terminal device 220 and the cloud 320. The cloud 320 may store the image 230 and may transmit the image 230 to the server 310 over the link 322. After the server 310 has again determined the rock size distribution of the sample of rocks 120 illustrated in the image 230, the server 310 may transmit the determined result to the terminal device 220 either directly over link 311 or via the cloud 320 over links 322 and 321. Before transmitting the determined result from the cloud 320 to the terminal device 220, the cloud 320 may store the determined result.

The above description of transmitting the image 230 from the terminal device 220 to the server 310 for determining the rock size distribution in the server 310 may be an example for an on-line mode. If, however, it is not possible to transmit the image 230 from the terminal device 220 to the server 310 due to, for example, insufficient communication connection between the terminal device 220 and the server 310, one option is to store the image 230 in the terminal device 220 and send the image 230 to the server 310 once the connection between the terminal device 220 and the server 310 has improved.

However, it may also be possible to execute an off-line mode, wherein the determination of the rock size distribution is solely performed on the terminal device 220. In this case, the terminal device 220 does not transmit the image 230 to the server 310 but determines the rock size distribution and outputs a result to the mine worker 210 once the rock size distribution has been determined. In this case, the rock size distribution can be determined even if the terminal device 220 does not have service (for example at a remote place) and thus cannot connect to the server 310. Another advantage of having an off-line mode is that a terminal device 220 can be used in the working station 220 which does not have any communication functions and thus cannot communicate with another device or server. Thus, the flexibility in using a terminal device for rock size distribution determination is increased. The terminal device may be configured to execute both the on-line mode and the off-line mode and thus may be able to switch between these two modes.

FIG. 4 is an illustration of a terminal device 220. The terminal device 220 may comprise a camera 410, an acquisition unit 420, a processor 430, a determination unit 440, a transmission unit 450, a receiving unit 460, and a memory 470. The components of the terminal device 220 are explained in more detail below.

The camera 410 of the terminal device 220 may be configured to take an image 230 of the sample of rocks 120. The camera may be any conventional hand-held or stationary camera and may be integrated into the terminal device 220 or may be connected to the terminal device 220.

The acquisition unit 420 may be configured to acquire, from the camera 410, such as a hand-held or stationary camera, the image 230 of the sample of rocks 120.

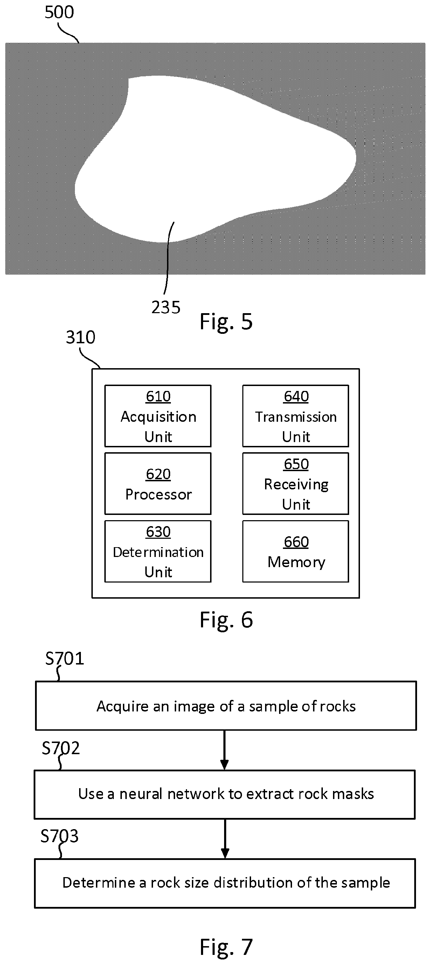

Moreover, the processor 430 of the terminal device 220 may be configured to process the image 230 of the sample of rocks 120 acquired from the camera 410 by the acquisition unit 420 when the terminal device 220 is operated in the off-line mode. The processor 430 may be configured to use a neural network algorithm for the image 230 to extract a rock mask for each rock 235 present in the image 230. The neural network algorithm may use any known neural network which comprises an input layer and an output layer and which may comprise one or several hidden layers. In addition, the neural network may be any type of neural network, for example feedforward neural network, recurrent neural network, transformer network, long short-term memory network, convolutional neural network, a multilayer perceptron, etc. The neural network may be trained such that, for each rock 235 in the image 230, a rock mask is created by the neural network algorithm. In this matter, each rock mask indicates at least one contour of the rock 235. In other words, from the rock masks the contours and dimensions of a rock 235 can be derived. FIG. 5 is an illustration of a rock mask 500 of a rock 235 being present in the sample of rocks 120. In the rock mask 500, the rock 235 is illustrated in a first color, e.g. light colour such as white, wherein the background not being part of the rock 235 is illustrated in a second color (different from the first color) which may be easily distinguishable from the first color of the rock 235. Any other representation of the rock mask 500 is possible given that the rock 235 and the background not being part of the rock 235 are easily and clearly distinguishable, e.g. by an image recognition algorithm. From this rock mask 500, the contour of the rock 235 and the dimensions of the rock 235 can be determined. This rock mask 500 is determined for every rock in the sample of rocks 120 and the contour and dimension of each rock in the sample of rocks 120 is determined in order to calculate the rock size dimension of the whole sample 120.

The determination unit 440 of the terminal device 220 may be configured to determine a rock size distribution of the sample 120 using a physical scale being associated with the image 230. Based on the rock mask 500 output by the neural network algorithm, the determination unit 440 is able to determine the contours and dimensions of the rocks in the sample 120, wherein the determination unit 440 uses a physical scale to change or convert the pixels of the image 230 to a spatial dimension in order to determine the rock size distribution of the sample 120. Once the rock size distribution is determined, the terminal device 220 is able to output the rock size distribution as a result to the mine worker 210, for example as a message being displayed on a screen of the terminal device 220, an alert, an audio message, an image, or the like.

The terminal device 220 may further comprise the transmission unit 450 which is configured to transmit data to another device or server over a wired or wireless network. For example, the transmission unit 450 transmits the image 230 taken by the camera 410 to the server 310 as shown in FIG. 3 during the on-line mode.

In addition, the terminal device 220 may comprise the receiving unit 460 which is configured to receive data from another device or server over a wired or wireless network. For example, the receiving unit 460 receives the determined rock size distribution as a result from the server 310 as shown in FIG. 3 during the on-line mode. Once the receiving unit 460 has received the result, the terminal device 220 may output the result to the mine worker 210 by displaying or outputting the result in any possible way and/or may output the result to the crushing machine 140 for parameter configuration.

Moreover, the terminal device 220 may comprise the memory 470 which is any kind of storage unit being able to store data in the terminal device 220. For example, the memory 470 stores the image 230 captured by the camera 410 or acquired by the acquisition unit 420. The memory 470 may further store the neural network algorithm which is executed by the processor 430 during the off-line mode or may store the determined rock distribution size of the sample of rocks 120 as a result irrespective of whether the rock size distribution has been determined by the terminal device 220 during off-line mode or by the server 310 during on-line mode. In addition, the memory 470 may store any computer program comprising instructions which can be executed by the terminal device 220.

It is to be noted that the components of the terminal device 220 are illustrated as single components. The terminal device 220 is not limited to this configuration and the components can be also combined.

Now, the configuration of the server 310 is described in more detail with reference to FIG. 6. FIG. 6 is an illustration of the server 310 according to an embodiment of the present invention. The server may comprise an acquisition unit 610, a processor 620, a determining unit 630, a transmission unit 640, a receiving unit 650, and a memory 660. The components of the server 310 are explained in more detail below.

The acquisition unit 610 may be configured to acquire from the camera of the terminal device 220 the image 230 of the sample of rocks 120, for example during the on-line mode, the terminal device 220 capturing the image 230 using the camera 410.

Once, the image 230 is acquired from the terminal device 220, the processor 620 of the server 310 may be configured to process the image 230 of the sample of rocks 120 during the on-line mode. The processor 620 may be configured to use a neural network algorithm for the image 230 to extract a rock mask (as explained above) for each rock 235 present in the image 230. The neural network algorithm may use any type of neural network as already described with reference to the terminal device 220. For each rock 235 in the image 230 a rock mask is created by the neural network algorithm, wherein each rock mask indicates at least one contour of the rock 235. The rock mask is similar to the rock mask 500 described with reference to FIG. 5 and thus a detailed description regarding the rock mask is omitted at this point due to conciseness reasons.

The determination unit 630 of the server 310 may be configured to determine a rock size distribution of the sample 120 using a physical scale being associated with the image 230. Based on the rock mask output by the neural network algorithm, the determination unit 630 is, similar to the determination unit 440, able to determine the contours and dimensions of the rocks in the sample 120, wherein the determination unit 630 uses a physical scale to change or convert the pixels of the image 230 to a spatial dimension in order to determine the rock size distribution of the sample 120. Once the rock size distribution is determined, the server 310 may transmit the determined rock size distribution to the terminal device 220 as shown in FIG. 3, wherein the terminal device 220 may output the rock size distribution as a result to the mine worker 210, for example as a message being displayed on a screen of the terminal device 220, an alert, an audio message, an image, or the like, and/or may output the result to the crushing machine 140.

The server 310 may further comprise the transmission unit 640 which is configured to transmit data to another device or server over a wired or wireless network. For example, the transmission unit 640 transmits the determined rock size distribution to the terminal device 220 as shown in FIG. 3. Another option is that the transmission unit 640 transmits the determined rock size distribution directly to the crushing machine 140 for an automatic tuning process.

In addition, the server 310 may comprise the receiving unit 650 which is configured to receive data from another device or server over a wired or wireless network. For example, the receiving unit 650 receives the image 230 from the terminal device 220 as shown in FIG. 3 and the acquisition unit 610 may acquire the image 230 after the receiving unit 650 has received the image 230.

Moreover, the server 310 may comprise the memory 660 which is any kind of storage unit being able to store data in the server 310. For example, the memory 660 stores the image 230 received by the receiving unit 650 and acquired by the acquisition unit 610. The memory 660 may further store the neural network algorithm which is executed by the processor 620 during the on-line mode or may store the determined rock distribution size of the sample of rocks 120 as a result.

It is to be noted that the components of the server 310 are illustrated as single components. The server 310 is not limited to this configuration and the components can be also combined.

Now, FIG. 7 shows a flowchart illustrating a method for determining a rock size distribution according to an embodiment of the present invention. The method may be either performed by the terminal device 220 or the server 310 as described with reference to FIGs. 4 and 6, depending on whether the image 230 is transmitted from the terminal device 220 to the server 310 during an on-line mode or whether the image 230 is analysed by the terminal device 220 during an off-line mode.

The method illustrated in FIG. 7 may be a computer-implemented method of determining a rock size distribution. The method may comprise step S701 of acquiring, from a camera of the terminal device 220, an image 230 of a sample of rocks 120. The step S701 may be either performed by the acquisition unit 420 of the terminal device 220 or by the acquisition unit 610 of the server 310.

The method may further comprise step S702 of using a neural network algorithm for the image 230 to extract a rock mask for each rock 235 present in the image 235, each rock mask indicating at least one contour. This step may be either performed by the processor 430 of the terminal device 220 or by the processor 620 of the server 310.

Subsequently, in step S703, a rock size distribution of the sample of rocks 120 using a physical scale being associated with the image 230 is determined. Step S703 may be either performed by the determination unit 440 of the terminal device 220 or by the determination unit 630 of the server 310.

As described above, the terminal device 220 may either, for an off-line mode, analyse the image 230 and determine the rock size distribution itself; or, for an on-line mode, transmit the image 230 to the server 310, such that the server 310 analyses the image 230 and determines the rock size distribution. The advantages for the off-line mode are that the configuration of the terminal device 220 can be simplified, as the terminal device 220 does not need any communication functions and the transmission unit 450 and the receiving unit 460 can be omitted. In addition, the rock size distribution can be determined even if the terminal device 220 is in a dead zone (e.g. in a remote or rural area), adding flexibility to the rock size determination. On the other hand, it may be helpful to transmit the image 230 to a server 310 and perform the rock size determination on the server 310 instead of on the terminal device 220 in order to reduce the computational burden on the terminal device 220. Irrespective of whether the on-line or off-line mode is performed, the tuning process for correctly tuning a crushing or grinding machine by setting configuration parameters corresponding to the rock size distribution of the sample of rocks 120 input to the crushing machine and the intended crushed rock size distribution is improved by using the method, the terminal device 220, and the server 310 described above.

As described above, a neural network algorithm is used to obtain a rock mask for each rock being present in the sample of rocks 120. The neural network algorithm may use a neural network that has been trained on training data showing various images of rock. The neural network is then able to output a rock mask for each rock, wherein the contours of each rock are visible in the rock mask by accentuating the surface of the rock in contrast to the background not being part of the rock surface. This is also shown in FIG. 5, wherein the surface of the rock is in a first (e.g. light) colour and the background not being part of the rock surface is in a second (e.g. dark) colour to accentuate the surface of the rock. From each rock mask, the contour of each rock can be obtained, the contour encircling the outer surface of the rock when viewing a rock from above.

However, the present inventors have realized that it may sometimes occur that erroneous rock masks are output by the neural network algorithm and no continuous rock surface is indicated by the rock mask. To remedy erroneous rock masks, error correction may be performed on the rock masks, the error correction being performed either by the terminal device 220 or by the server 310.

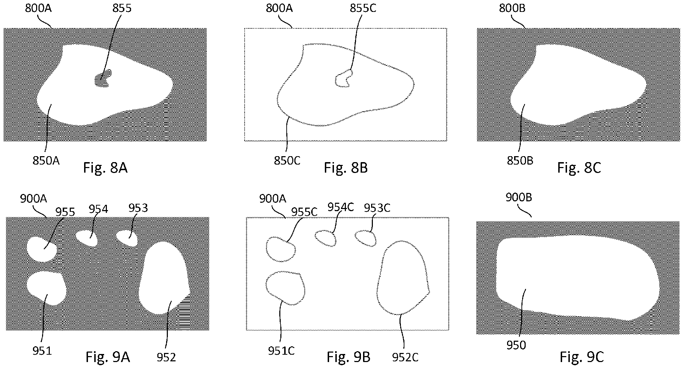

FIGs. 8A, 8B, and 8C show an erroneous rock mask and how the rock mask can be remedied. As shown in FIG. 8A, the neural network may sometimes output an erroneous rock mask 800A, wherein the rock mask 800A indicates a disruptive and non-continuous rock surface 850A. For example, a hole 855 is present in the rock surface 850A, the hole 855 being indicated as not being a part of the rock surface 850A. One option for performing error correction on the erroneous rock mask 800A is finding all the contours that are present in the rock mask, and if a first contour is found inside a second contour in a rock mask, the first contour is removed to cover a continuous surface by the second contour. The error correction may be again performed by the terminal device 220 or the server 310.

The step of finding all the contours being present in the rock mask 800A is shown in FIG. 8B. Contour 850C is a contour encircling the surface 850A indicated in FIG. 8A, while contour 855C is a contour encircling the hole 855 shown in FIG. 8A. In this case, the contour 855C is found inside the contour 850C. When performing error correction on the erroneous rock mask 800A, the contour 855C is removed and contour 850C now covers a continuous surface. FIG. 8C shows the remedied rock mask 800B, wherein the surface 850B shows a continuous rock surface without holes.

FIGs. 9A, 9B, and 9C show another example of an erroneous rock mask. Instead of having a hole in a rock surface of the rock mask, FIG. 9A shows a fragmented surface in the rock mask 900A, the fragmented surface being several fragments 951 to 956 which are present in the rock mask 900A. For performing error correction on this erroneous rock mask 900A, again all contours in the rock mask 900A are found. If a plurality of contours is found adjacent to one another in the rock mask 900A, the plurality of contours may be merged to cover a continuous surface. The error correction may be again performed by the terminal device 220 or the server 310.

The step of finding all the contours being present in the rock mask 900A is shown in FIG. 9B. Contours 951C to 956C are the contours of the fragments 951 to 956 in FIG. 9 and are found to be adjacent to one another in the rock mask 900A. This means that no contour is located in another contour and the surfaces encircled by the contours 951c to 956c do not overlap. In this case, when performing error correction on the erroneous rock mask 900A, the plurality of contours 951c to 956c may be merged to a single contour covering a continuous surface. FIG. 9C shows the remedied rock mask 900B, wherein the surface 950 shows a continuous rock surface being encircled by a single contour that has been obtained by merging the contours 951C to 956C.

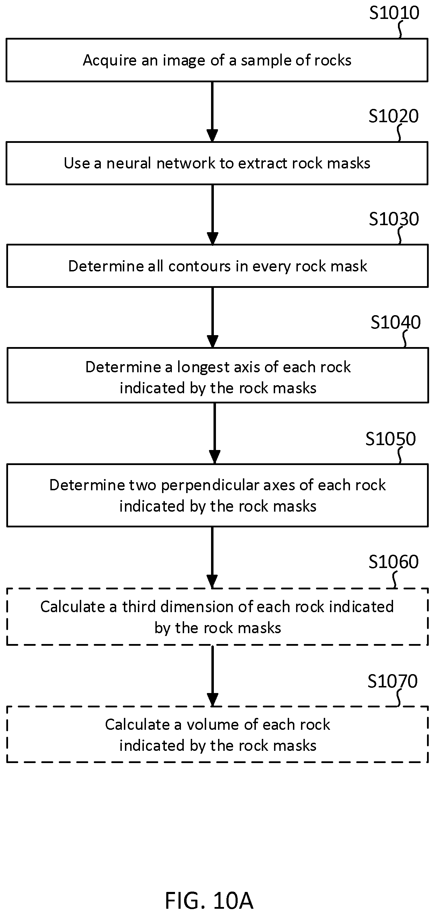

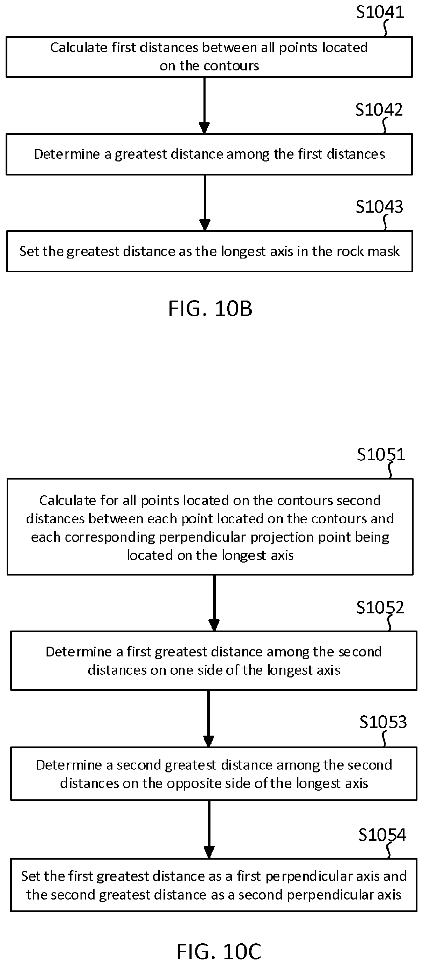

FIGs. 10A to 10C show flowcharts illustration a method for determining a rock size distribution according to an embodiment of the present invention. In this context, FIGs. 10B and 10C give a more detailed description of steps 1040 and 1050 described with respect to FIG. 10A.

When referring to FIG. 10A, first an image of a sample of rocks is acquired in step S1010. For example, a camera of a terminal device 220 takes an image 230 of a sample of rocks 102 and an acquisition unit of the terminal device 220 or of a server 310 acquires the image 230 from the camera. The camera may be a hand-held camera for more flexibility of taking an image and analysing a sample of rocks. If the acquisition unit 420 of the terminal device 220 is used for acquiring the image 230, the terminal device 220 may operate in an off-line mode. If the acquisition unit 610 of the server 310 is used for acquiring the image 230, the terminal device 220 may operate in an on-line mode.

In step S1020, a neural network is used by the terminal device 220 or the server 310 to extract rock masks for each rock present in the sample of rocks 102. For more details regarding the rock masks, it is referred to FIG. 5 as described above. As an input, the neural network takes the acquired image 230 and outputs a rock mask for each rock in the sample of rocks 102 represented by the image 230. The neural network has been trained on several input-output pairs, the input being an image of a sample of rocks and the output being corresponding rock masks, to be able to accurately determine and output rock masks for any image being input in the neural network.

In step 1030, all contours are determined in every rock mask for each rock of the sample of rocks 102. For determining contours in a rock mask, various methods can be performed which are known to the skilled person. For example, an algorithm can be used which uses a gradient to find contours in a rock mask. The contours can be, for example, found depending on the colour and/or intensity gradient in a rock mask, as the rock represented in a rock mask may be of different colour and/or intensity than the background not being part of the rock. Any suitable method for determining contours in a rock mask can thus be used.

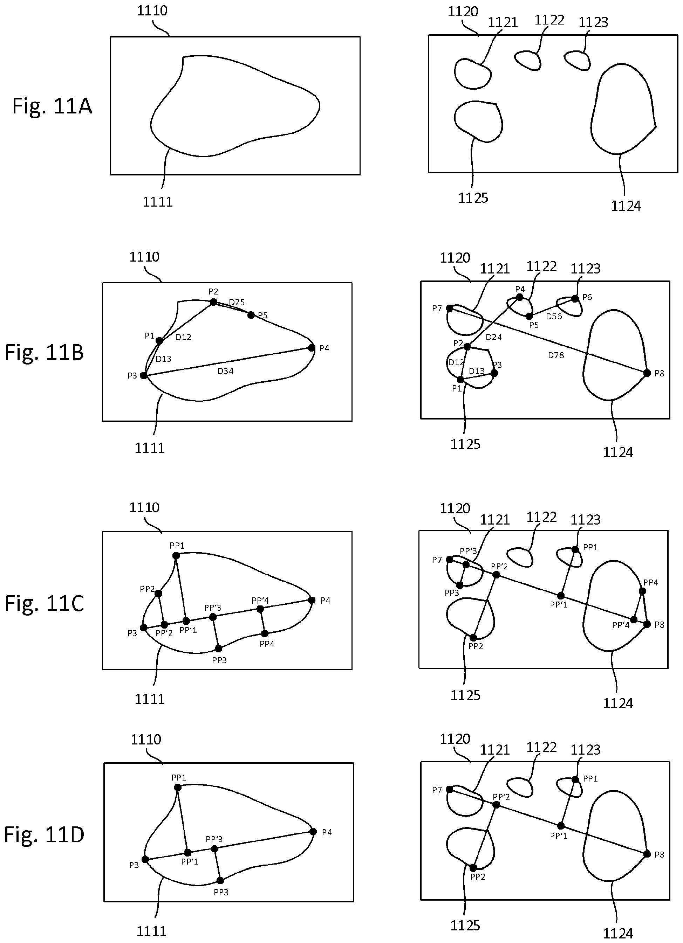

Once the contours are found in each rock mask, a longest axis of each rock indicated by the respective rock mask is determined in step S1040. Further details for step S1040 are given with respect to FIG. 10B and FIGs. 11A and 11B. FIGs. 11A and 11B show examples of finding a longest axis from the contours found in a rock mask. In FIG. 11A, two rock masks 1110 and 1120 are illustrated, wherein the contours have already been determined. Rock mask 1110 includes one contour 1111, either because the neural network has output a rock mask with one continuous surface indicating the rock or because error correction has been performed on a rock mask which indicated several fragments of one rock. Rock mask 1120 includes several contours 1121 to 1125, the contours 1121 to 1125 encircling fragments forming one surface of a rock.

As shown in FIG. 10B, the first step of determining the longest axis of a rock may be step S1041 of calculating first distances between all points being located on the contours. To further illustrate this step, FIG. 11B shows the rock masks 1110 and 1120 of FIG. 11A, wherein distances between the points located on the contours are calculated. For example, if only one contour is found in the rock mask, see the left side of FIG. 11B with one contour 1111, distances between every point present on the contour 1111 are calculated. For illustrative purposes, the distances between a few exemplary points are shown in FIG. 11B, but the method of FIG. 10B may calculate the distances between all the points being located on the contour 1111. As shown in rock mask 1110 of FIG. 11B, a distance D12 may be calculated between points P1 and P2, a distance D13 may be calculated between points P1 and P3, a distance D34 may be calculated between points P3 and P4, and a distance D25 may be calculated between points P2 and P5.

If a rock mask includes several contours (due to several fragments), like rock mask 1120 having contours 1121 to 1125 as illustrated in FIG. 11B on the right side, distances may be calculated between points being located on the same contour on being located on different contours. Again, only a few calculated distances are shown in rock mask 1120 for illustrative purposes, but the method may calculate the distances between all points being located on the contours. As shown in rock mask 1120 of FIG. 11B, a distance D12 may be calculated between points P1 and P2, a distance D13 may be calculated between points P1 and P3, a distance D24 may be calculated between points P2 and P4, a distance D56 may be calculated between points P5 and P6, and a distance D78 may be calculated between points P7 and P8.

Next, a greatest distance among the first distances is determined in step S1042 illustrated in FIG. 10B. In the examples illustrated in FIG. 11B, the greatest distance in rock mask 1110 among the calculated distances D12, D13, D25, and D34 is distance D34 and the greatest distance in rock mask 1120 among the calculated distances D12, D13, D24, D56, and D78 is distance D78.

Subsequently, in step S1042 of FIG. 10B, the greatest distance is set as the longest axis in the rock mask. For the examples given in FIG. 11B, the longest axis in rock mask 1110 is distance D34 and the longest axis in rock mask 1120 is distance D78.

Once the longest axis is determined for each rock mask, the process illustrated in FIG. 10A proceeds to step S1050. In step S1050, two perpendicular axes of each rock indicated by the rock masks are determined. Further details regarding this step are illustrated in FIG. 10C and FIG. 11C.

In step S1051 of FIG. 10C, for all points being located on the contours determined for each rock mask, second distances between each point being located on the contours and each corresponding perpendicular projection point being located on the longest axis determined in the steps of FIG. 10B are calculated. Step S1051 is also illustrated in FIG. 11C, wherein for the rock masks 1110 and 1120, distances between the points being located on the contours are calculated. Again, the distances are only shown for an exemplary amount of points, but step S1051 may be performed for each point being located on the contours. In rock mask 1110, the point PP1 being located on the contour 1111 is shown. Once point PP1 is selected, a corresponding perpendicular projection point PP'1 is found which is located on the longest axis determined in FIGs. 10A and 11B. Here, the longest axis is between points P3 and P4. A point is perpendicular to another point if a straight line connecting these two points is perpendicular to the longest axis. Then the distance between points PP1 and PP'1 is calculated. In FIG. 11C, the points PP2, PP3, and PP4 are further illustrated, wherein their corresponding perpendicular projection points are PP'2, PP'3, and PP'4. Then the distances between PP2 and PP'2, PP3 and PP'3, and PP4 and PP'4 are calculated.

The same procedure can be also applied to rock mask 1120 of FIG. 11C which includes several contours 1121 to 1125 encircling several different surfaces. Again, solely an exemplary number of points being located on the contours 1121 to 1125 are illustrated, but step S1051 may be performed for each point being located on the contours 1121 to 1125. In rock mask 1120, the points PP1, PP2, PP3, and PP4 are illustrated, wherein the corresponding perpendicular projection points PP'1, PP'2, PP'3, and PP'4 are located on the longest axis between points P7 and P8, the longest axis being determined in the steps of FIG. 10B and shown in FIG. 11B.

Once the distances between each point being located on the contours and the corresponding perpendicular projection points are calculated, a first greatest distance among the distances on one side of the longest axis is determined in step S1052 illustrated in FIG. 10C. Step S1052 is also shown in FIG. 11C, wherein the first greatest distance in rock mask 1110 may be the distance between point PP1 and the corresponding perpendicular projection point PP'1 and the first greatest distance in rock mask 1120 may be the distance between point PP1 and the corresponding perpendicular projection point PP'1.

In step S1053, then a second greatest distance among the distances calculates in step S1051 is determined on the opposite side of the longest axis. Step S1053 is also shown in FIG. 11C, wherein the second greatest distance in rock mask 1110 may be the distance between point PP3 and the corresponding perpendicular projection point PP'3 and the second greatest distance in rock mask 1120 may be the distance between point PP2 and the corresponding perpendicular projection point PP'2. In FIG. 11C it is illustrated that the first greatest distance is determined between points being located on one side of the longest axis, wherein the second greatest distance is determined between points being located on the other side of the longest axis.

Thus, as also illustrated in FIG. 11D, the longest axis between points P3 and P4 in rock mask 1110 or between points P7 and P8 rock in mask 1120 represents the maximum length of the rock indicated by the rock masks 1110 and 1120, while the perpendicular axes between points PP1 and PP'1 and PP3 and PP'3 in rock mask 1110 and between points PP1 and PP'1 and PP2 and PP'2 of rock mask 1120 represent the maximum widths of the rock indicated by the rock masks 1110 and 1120. Based on these axes for each rock in a sample of rocks, the rock size distribution of the sample of rocks can be determined.

As shown in FIG. 10A, two more steps indicated with dashed lines may be performed as an option to improve the accuracy in calculating the rock size distribution of a sample of rocks. It may be possible to calculate in step S1060 a third dimension of each rock indicated by the rock masks. For calculating the third dimension of the rock, any method known to the skilled person can be used by either using the determined longest axis and the two perpendicular axes or any other characteristic of the rock indicated by the rock mask. For example, for calculating the third dimension, the method given in the dissertation "Optical Gradation for Crushed Limestone Aggregates" by Ken Cheng uploaded on September 8, 2015, on pages 85 - 86, equation 6.10, can be used. Equation 6.10 of the dissertation is as follows:

$$\frac{H_{nom}}{D_{\min}} = \beta_0 + \beta_1 \frac{D_{maj}}{D_{\min}} + \beta_2 \frac{D_{\min}}{2M_{sig}} + \beta_3 \left( -\log\left( \frac{V_{sig}}{M_{sig}^2} \right) \right)^{-1} + \varepsilon \qquad (6.10)$$

wherein $H_{nom}$ is the nominal height and thus the third dimension which is to be calculated. This is also illustrated in Figure 6.4 (a) given on page 87 of the dissertation.

This figure illustrates that $D_{maj}$ is equal to the length of the longest axis determined above and $D_{min}$ is equal to the sum of the lengths of the two perpendicular axes determined above.

When referring back to equation 6.10, $M_{sig}$ is the mean value of the non-normalized signature and $V_{sig}$ is the variance of the non-normalized signature. $\frac{D_{min}}{2M_{sig}}$ represents the roundness and measures the circularity of the rock. Its value increases to 1 as the profile shape of the rock becomes more circular. This is also shown in Figure 6.4 (c) of the dissertation.

In equation 6.10, $\frac{V_{sig}}{M^2{}_{sig}}$ represents the jaggedness, wherein for a perfectly smooth edge line, the value is zero. The jaggedness is also demonstrated in Figure 6.4 (d) of the dissertation.

In equation 6.10, the parameter $\varepsilon$ is a random error and the parameters $\beta_0$, $\beta_1$, $\beta_2$, and $\beta_3$ are partial regression coefficients as described on page 81 of the dissertation. The parameter $\varepsilon$ may, for example, be set to zero and the partial regression coefficients $\beta_0$, $\beta_1$, $\beta_2$, and $\beta_3$ may be set to the values given in equation 6.17 on page 89 of dissertation.

When the third dimension is calculated, e.g. when $H_{nom}$ of equation 6.10 is used, a volume for each rock indicated by the rock mask in the sample of rocks may be calculated by using the length of the longest axis, the sum of the lengths of the two perpendicular axes, and the value of the third dimension, e.g. the nominal height $H_{nom}$. The calculated volume for each rock is here indicated as a "rock mass", i.e. the mass (equals volume) of each rock. The total mass of a sample of rocks is the sum of the rock masses of the rocks present in the sample.

Once all the necessary rock parameters have been calculated, such as the longest axis, the two perpendicular axes (and alternatively also the third dimension and volume/mass of a rock), the rock size distribution for each available sieve which let a rock with a specific volume/mass pass can be determined. The rock size distribution may be used to determine sieve-specific mass of rocks of the sample. Different methods known to the skilled person can be used to determine the rocks passing through a sieve based on the rock mass, for example the method disclosed on page 112 of the dissertation "Optical Gradation for Crushed Limestone Aggregates" by Ken Cheng. For the rock size distribution, the mass of rocks passing through a specific sieve x may be summed and the sum of the mass of rocks passing through sieve x may be divided by the total mass of rocks of the sample to obtain a percentage value of how many rocks of the sample of rocks pass through the sieve x. This calculation can be performed for every available sieve to obtain a rock size distribution graph illustrating a cumulative volume/mass in percentage passing through sieves.

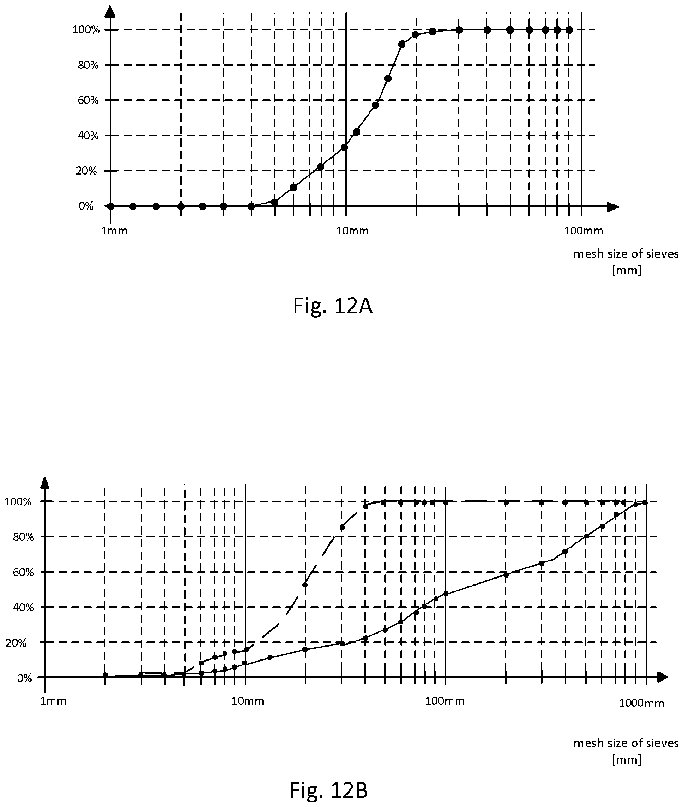

FIG. 12A is an illustration of an exemplary rock size distribution graph. The x-axis of the rock size distribution graph in logarithmic scale of 10 represents the mesh sizes of various sieves x, while the y-axis represents the cumulative mass/volume passing sieve x. For example, the rock size distribution graph shows that for a sieve with a mesh size of 10mm, approximately 0% of the rocks with corresponding rock masses/volumes of the sample of rocks pass this sieve. For a sieve with a mesh size of 100mm, approximately 80% of the rocks with corresponding masses/volumes pass this sieve. For sieves with mesh sizes of 200mm to 1000mm, approximately 100% of the rocks with corresponding masses/volumes pass this sieve. For the mesh size, any other spatial dimension, like centimetre, metre, etc. may be used instead of millimetre. In this matter, FIG. 12A may indicate the rock size distribution graph of a sample of rocks entering, for example, a crushing machine. However, the rock size distribution may be also determined for a sample of rocks leaving a crushing machine, wherein the crushing machine has performed crushing on the sample of rocks. Then, FIG. 12A may indicate the rock size distribution graph of a sample of rocks which has been crushed by the crushing machine.

FIG. 12B is an illustration of exemplary rock size distribution graphs corresponding to a sample of rocks before a crushing process and to the sample of rocks after the crushing process. The rock size distribution graph illustrated with a continuous line in Fig. 12B represents the rock size distribution of a sample of rocks before a crushing process, wherein the rock size distribution illustrated by a dashed line in Fig. 12B represents the rock size distribution of the sample of rocks after the crushing process. When comparing these two rock size distribution graphs, it is apparent that the rocks of the crushed sample of rocks are smaller than the rocks of the sample of rocks before the crushing process.

This rock size distribution graph may be calculated by the terminal device 220 or the server 310. The rock size distribution graph may be displayed on a screen of the terminal device 220, such that a mine worker or user of the terminal device is able to configure the parameters of crushing or grinding machines based on the rock size distribution of the rocks in order to obtain an optimum or intended sample of rocks after the crushing process, thereby avoiding waste of resources or time. In this matter, an optimum sample of rocks after the crushing process is a sample of rocks having desired rock sizes. Instead of displaying the graph, any other display mode may be selected, like in a form of a table, a bar chart, an input/output interface which accepts, as input, a mesh size of a sieve and outputs the corresponding cumulative mass passing this sieve with the input mesh size, etc. By doing so, the user or mine worker using the terminal device 220 is able to easily configure and tune the crushing or grinding machine by correctly setting the configuration parameters of the crushing or grinding machine based on the specific rock size distribution. Thus, the tuning process for setting the configuration parameters of a crushing or grinding machine can be simplified and improved, while the tuning process is sped up and the error rate for wrongly setting the parameters is decreased. As described above, the configuration parameters may be the speed of crushing the rocks, the crushing force applied to the rocks, the crushing duration indicating how long the rocks are crushed, and the like.

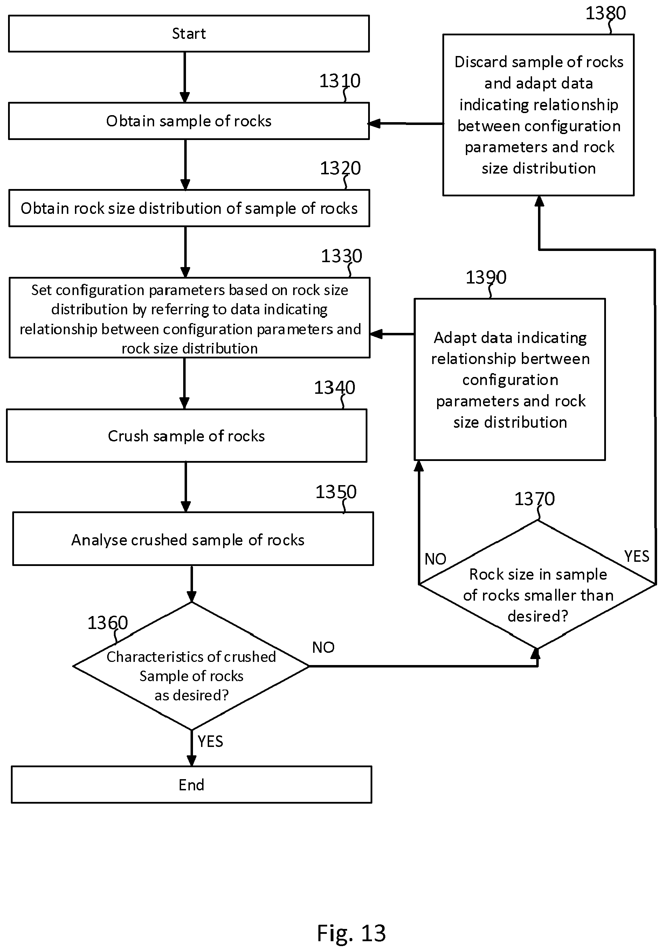

Instead of manually setting the parameters of a crushing or grinding machine, the result of the rock size distribution may be also sent to the crushing or grinding machine, such that the crushing or grinding machine may automatically configure itself. In this matter, FIG. 13 shows a flowchart describing the automatic configuration of the crushing or grinding machine.

As described in FIG. 13, the crushing or grinding machine, for example, the crushing machine 140 of FIG. 2, may obtain a sample of rocks 120 to be crushed in step 1310. In the following, FIG. 13 is described in combination with the components introduced in FIG. 2 for illustrative purposes. For example, the conveyor belt 110 directly transports the sample of rocks 120 to the opening 141 of the crushing machine 140, wherein the sample of rocks 120 falls in the crushing machine 140 or a dredger transports the sample of rocks 120 from the conveyor belt 110 to the crushing machine 140. Any other transportation process or transportation system can be used, such that the crushing machine 140 obtains the sample of rocks 120.

Then, in step 1320, the crushing machine 140 may obtain the rock size distribution of the sample of rocks 120. The rock size distribution of the sample of rocks 120 may be determined by the terminal device 220 or by the server 310 and may be transmitted from the terminal device 220 or from the server 310 to the crushing machine 140.

In addition, in step 1330, the crushing machine 140 may set its configuration parameters, like the speed of crushing the rocks, the crushing force applied to the rocks, the crushing duration indicating how long the rocks are crushed, and the like, depending on the obtained rock size distribution of a sample of rocks entering the crushing machine and the intended rock size distribution of the rocks leaving the crushing machine 140 after having being crushed. The crushing machine 140 may, for example, refer to data which indicate a relationship between various rock size distributions (before crushing and after crushing) and the corresponding configuration parameters. These data may be saved in a memory of the crushing machine 140 or in a memory external to the crushing machine 140. If the memory saving the data is external to the crushing machine 140, the crushing machine 140 may comprise a communication unit to be able to obtain the data from the external memory. Once the configuration parameters are set in step 1330, the crushing machine 140 starts crushing the sample of rocks 120.

After having crushed the sample of rocks 120 in step 1340, the crushed sample of rocks 120' is analysed in step 1350 by now taking an image 230 of the crushed sample of rocks 120' and determining the rock size distribution of the crushed sample of rocks 120' by the terminal device 220 or the server 310 as described above.

Once the rock size distribution of the crushed sample of rocks 120' is obtained, it is determined whether the characteristics of the crushed sample of rocks is as desired. This can be done manually by a user or mine worker, or automatically by a control device, the crushing machine 140, the terminal device 220, the server 310, or any other device able to perform a determination process. For automatically determining whether the characteristics of the crushed sample of rocks is as desired, the rock size distribution of the crushed sample of rocks 120' may be compared to an ideal/intended rock size distribution being set and stored beforehand. If the rock size distribution of the crushed sample of rocks 120' is identical or almost identical to the ideal rock size distribution, depending on a predetermined deviation allowed between the rock size distribution of the crushed sample of rocks 120' and the ideal rock size distribution ("YES" in step 1360), the process of the crushing machine 140 is completed.

If, however, the rock size distribution of the crushed sample of rocks 120' deviates from to the ideal rock size distribution more than the predetermined and allowable deviation meaning that the characteristics of the crushed sample of rocks 120' is not as desired ("NO" in step 1360), it is determined whether the rock sizes in the crushed sample of rocks is smaller than desired (step 1370). If the crushed sample of rocks is smaller than desired ("YES" in step 1370), the crushed sample of rocks 120' has to be discarded in step (1380) and a new sample of rocks is obtained by the crushing machine 140. Either a user or mine worker discards the sample of rocks or the crushing machine automatically discards the sample of rocks by opening an opening of the crushing machine which allows that the crushed sample of rocks 120' falls out of the crushing machine 140. Any other method for discarding the sample of rocks 120' can be used.

In addition, in step 1380, the data indication the relationship between rock size distributions and corresponding configuration parameters may be adapted to include a learning process (feedback control, such as a PID controller) in the configuration of the crushing machine 140. Based on a comparison between rock size distributions (before crushing (i.e. entering the machine) and after crushing (I.e leaving the machine)), if it is determined in step 1370 that the rock sizes in the crushed sample of rocks 120' are too small, the data may be adapted in such a way that, for example, the speed of crushing the rocks, the crushing force and/or the crushing duration or any other configuration parameter for the corresponding rock size distribution are reduced. The steps 1310 to 1380 are again executed with the new sample of rocks and adapted data for setting the configuration parameters.

If the rock sizes in the crushed sample of rocks 120' is bigger than desired ("NO" in step 1370), it is possible to further crush the rocks in order to obtain the desired rock size distribution of the sample of rocks 120'. In addition, in step 1390, the data indication the relationship between rock size distributions and corresponding configuration parameters may again be adapted to include the learning process (feedback control, such as a PID controller) in the configuration of the crushing machine 140. If it is determined in step 1370 that the rock sizes in the crushed sample of rocks 120' are too big, the data may be adapted in such a way that, for example, the speed of crushing the rocks, the crushing force and/or the crushing duration or any other configuration parameter for the corresponding rock size distribution are increased. Then, the steps 1330 to 1380 are again executed until the desired rock size distribution is obtained.

However, for being able to use the rock dimensions, like the longest axis, the perpendicular axes, and alternatively also the third dimension, the volume, etc., based on an image taken by a camera, like the camera of the terminal device 220, to determine which sieves with a specific mesh size let the rocks with a specific rock mass pass, scaling should be applied to the image of the sample of rocks. By applying scaling to the image, each pixel in the image is scaled to a spatial dimension, like millimetre, centimetre, metre, etc. Depending on whether the terminal device 220 or the server 310 may apply scaling to the acquired image, a scaling unit (not shown) of the terminal device 220 or a scaling unit (not shown) of the server 310 may apply the scaling to the image.

For applying scaling to the image and thus in order to convert, for example, the longest axis and the perpendicular axes into spatial dimensions, the longest axis and the perpendicular axes being in pixels first, the centroid of a rock in the image is calculated having the coordinates (X;Y) and a scale value S (in, for example, millimetre/pixel; centimetre/pixel; ...) in a scaling map at a position with the coordinates (X;Y) is found. The scaling map indicates for each position in the image a scale value S which is used to convert any features calculated from the image, like longest, axis, perpendicular axes, etc., and being indicated in pixels into spatial dimensions. When the respective scale value S is found, the calculated features are multiplied to the scale value S to have the calculated features in spatial dimension. If, for example, the longest axis is given in [pixels] and the longest axis is multiplied to the scale value S in [millimetre/pixels], the result of this multiplication is the longest axis in [millimetre]. Once the longest axis and the perpendicular axes for each rock mask are converted into a spatial dimension, these axes can be used to calculate the third dimension, the volume, or the like as described above.

Furthermore, a scaling map may be acquired by the terminal device 220 which may be taken from the sample of rocks and which may indicate the size of each pixel of the image in a spatial dimension, such as millimetre, centimetre, metre, etc. For example, depending on the conveyor angle or the camera angle, if an object is far away from a camera, the object seems to be small in the image and is represented by a few pixels. If, however, the same object is close to the camera, the object seems to be large in the image and is represented by many pixels. The scaling values given by the scaling map may then indicate the relationship between the spatial dimension and the number of pixels. If, for example, an object of 20mm is located far away from the camera and is thus only represented by 2 pixels, the scaling value is 20mm/2pixels = 10mm/pixel. If the same object of 20mm is located close to the camera and is thus represented by 20 pixels, the scaling value is 20mm/20pixels = 1mm/pixel. Thus, in other words, the size of pixels may be bigger in the spatial dimension if the pixels correspond to objects in the image being far away from the camera, and the size of pixels may be smaller in the spatial dimension if the pixels correspond to objects in the image being closer to the camera. Further processing of the image may be determined based on the scaling map, wherein further processing may, for example, include using the image to obtain rock masks and to calculate the rock dimensions and rock masses based on the rock mask.

The scaling map may divide the image of the sample of rocks in various zones, wherein one zone may comprise at least one pixel of the image and wherein each zone is associated with a scale value. Again, the scale value may have the unit [millimetre/pixel], [centimetre/pixel], [metre/pixel], or the like. The scale value associated to the zones may vary depending on the distance of the sample of rocks to the camera, the angle of the camera while the image of the sample of rocks was taken, the visibility when the image was taken, like brightness/darkness, or the like. It is determined that further processing of the image is allowable if the scaling map indicates that a number of zones of the image with a valid scale value exceeds a predetermined threshold. For example, a user may define that a valid scale value is greater than zero, and that a scale value being smaller than or equal to zero indicates an error which has occurred when creating the scaling map. An error can occur in the scaling map when, for example, the camera is too close to the sample of rocks when taking the image or the when the angle of the camera for taking the image of the sample of rocks is inappropriate. In addition, an error can occur in the scaling map when the visibility is deteriorated, because it is too bright or too dark when the image is taken. By making sure that the number of valid scale values is above a predetermined threshold, it ensured that the quality of the image is adequate to allow further processing of the image, like determining the rock size distribution of a sample of rocks based on the acquired image.

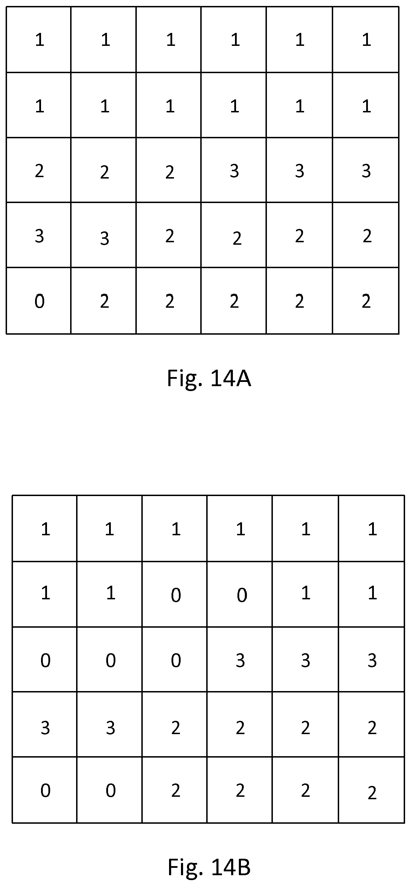

FIGs. 14A and 14B show examples of a scaling map according to an embodiment of the present invention. The scaling maps illustrated in FIGs. 14A and 14B each comprise 30 fields having respective scale values of 0, 1, 2, or 3. The 30 fields indicate that the acquired image corresponding to the scaling map is divided into 30 zones, each scale value being assigned to a specific zone of the image. It may be determined that a valid scale value is any value larger than 0 and that the predetermined threshold for determining whether further processing is allowable may be 27.

In the example illustrated in FIG. 14A, it is determined that the scaling map comprises 29 fields having valid scale values of 1, 2, or 3, and 1 field having an invalid scale value of 0. Thus, the number of zones of the image with a valid scale value is 29 and exceeds the threshold being set to 27. In this matter, further processing of the image is allowed.

The example illustrated in FIG. 14B shows another scaling map having 23 fields with valid scale values of 1, 2, or 3, and 7 fields with invalid scale values of 0. Thus, the number of zones of the image with a valid scale value is 23 and does not exceed the threshold being again set to 27. In this matter, further processing of the image is rejected.

If it is determined that further processing of the image is rejected, as illustrated in FIG. 14B, an embodiment of the present invention may be to issue, by the terminal device 220, an alert to a user of the camera of the terminal device 220, like a hand-held or stationary camera, to move the camera in order change the distance between the sample of rocks and the camera. Then a new scaling map is acquired, wherein the new scaling map is taken from the sample of rocks after the camera has been moved. By requesting a movement of the camera, the quality of the image taken by the camera may be improved and further processing may be now allowed. Instead of or in addition to alerting the user to change the distance between the sample and the camera, the user may be also alerted to change the angle of holding the camera, the visibility by adapting the brightness or darkness and/or other settings to improve the quality of the image. An alert may be a message or a warning being displayed on a screen of the terminal device, an audio alert being audible for the user, a vibration of the terminal device, or any other kind of alert informing the user about changing the setting of the camera. By issuing an alert, it is ensured that only images are processed which can be used as a basis for accurately and correctly analysing the corresponding sample of rocks.

Embodiments of a computer-implemented method, a terminal device, and a server for determining a rock size distribution have been described in detail above. The present invention may further regard a computer program for determining a rock size distribution, the computer program comprising instructions which, when the program is executed by a computer, cause the computer to carry out the embodiments of the computer-implemented method as described above. In addition, the present invention may further regard a computer-readable storage medium for determining a rock size distribution, the computer-readable storage medium comprising instructions which, when executed by a computer, cause the computer to carry out the computer-implemented method as described above. By performing any one of the embodiments as described above, it is possible to automatically, easily, and quickly determine a rock size distribution of a sample of rocks. In addition, it is possible to simplify and improve a tuning process for tuning and configuring a crushing machine or grinding machine for further processing, while speeding up the tuning process and decreasing the error rate.

The computer-implemented method, the server, the terminal device, the computer program, and the computer-readable storage medium herein are not limited to these scenarios as described in detail above. As described above, embodiments and examples of the invention allow for improved determination of rock size distributions and for improved tuning of crushing or grinding machines for further processing of the sample of rocks.

It will be appreciated that various modifications and variations can be made in the described systems and methods as well as in the construction of this invention without departing from the scope or spirit of the invention.

The invention has been described in relation to particular embodiments and examples which are intended in all aspects to be illustrative rather than restrictive.

Moreover, other implementations of the invention will be apparent to the skilled person from consideration of the specification and practice of the invention disclosed herein. It is intended that the specification and the examples be considered as exemplary only. To this end, it is to be understood that inventive aspects lie in less than all features of the foregoing disclosed implementation or configuration. Thus, the true scope and spirit of the invention is indicated by the following claims.

## Claims

**1.** A computer-implemented method of determining a rock size distribution, comprising:

acquiring, from a camera, an image of a sample of rocks;
using a neural network algorithm for the image to extract a rock mask for each rock present in the image, each rock mask indicating at least one contour; and
determining a rock size distribution of the sample using a physical scale being associated with the image.

**2.** The computer-implemented method according to claim 1, wherein error correction is performed on the rock masks.

**3.** The computer-implemented method according to claim 2, wherein, for the error correction, contours are found in each rock mask, and
if a first contour is found inside a second contour in a rock mask, the first contour is removed to cover a continuous surface by the second contour.

**4.** The computer-implemented method according to claim 2 or 3, wherein, for the error correction, contours are found in each rock mask, and
if a plurality of contours is found adjacent to one another in a rock mask, the plurality of contours is merged to cover a continuous surface.

**5.** The computer-implemented method according to any one of claims 1 to 4, further comprising:

determining all contours in a rock mask;
calculating first distances between all points being located on the determined contours;
determining a greatest distance among the first distances calculated for all the point being located on the determined contours, the greatest distance defining a longest axis of the rock indicated by the rock mask;
calculating, for all points being located on the determined contours, second distances between each point being located on the determined contours and each corresponding perpendicular projection point being located on the longest axis;
determining a first greatest distance among the second distances on one side of the longest axis and a second greatest distance among the second distances on the opposite side of the longest axis, the first greatest distance defining a first perpendicular axis and the second greatest distance defining a second perpendicular axis, the first perpendicular axis and the second perpendicular axis being perpendicular axes of the rock indicated by the rock mask.

**6.** The computer-implemented method according to any one of claims 1 to 5, wherein the rock size distribution is used to determine sieve-specific mass of rocks of the sample.

**7.** The computer-implemented method according to any one of claims 1 to 6, further comprising
applying scaling to the image of the sample of rocks, wherein each pixel in the image is scaled to a spatial dimension.

8. The computer-implemented method according to any one of claims 1 to 7, further comprising
acquiring a scaling map, the scaling map being taken from the sample of rocks;
wherein further processing of the image is determined based on the scaling map, the scaling map indicating the size of each pixel of the image in spatial dimension.

9. The computer-implemented method according to claim 8, wherein it is determined that further processing of the image is allowed if the scaling map indicates that a number of zones of the image with a valid scale value exceeds a predetermined threshold.

10. The computer-implemented method according to claim 8 or 9,
wherein, if it is determined that further processing of the image is rejected, the method further comprises issuing an alert to a user of the camera to move the camera in order to change the distance between the sample of rocks and the camera, and
wherein a new scaling map is acquired, the new scaling map being taken from the sample of rocks after the camera has been moved.

11. A server for determining a rock size distribution, comprising:

an acquisition unit configured to acquire, from a camera, an image of a sample of rocks;
a processor configured to use a neural network algorithm for the image to extract a rock mask for each rock present in the image, each rock mask indicating at least one contour; and
a determining unit configured to determine a rock size distribution of the sample using a physical scale being associated with the image.

12. The server according to claim 11, wherein the server is configured to perform error correction on the rock masks.

13. The server according to claim 12, wherein, for the error correction, the server is configured to find contours in each rock mask, and
if a first contour is found inside a second contour in a rock mask, the first contour is removed to cover a continuous surface by the second contour.

14. The server according to claim 12 or 13, wherein, for the error correction, the server is configured to find contours in each rock mask, and
if a plurality of contours is found adjacent to one another in a rock mask, the plurality of contours is merged to cover a continuous surface.

15. The server according to any one of claims 11 to 14,
the server is further configured to

determine all contours in a rock mask;
calculate first distances between all points being located on the determined contours;
determine a greatest distance among the first distances calculated for all the point being located on the determined contours, the greatest distance defining a longest axis of the rock indicated by the rock mask;
calculate, for all points being located on the determined contours, second distances between each point being located on the determined contours and each corresponding perpendicular projection point being located on the longest axis;
determine a first greatest distance among the second distances on one side of the longest axis and a second greatest distance among the second distances on the opposite side of the longest axis, the first greatest distance defining a first perpendicular axis and the second greatest distance defining a second perpendicular axis, the first perpendicular axis and the second perpendicular axis being perpendicular axes of the rock indicated by the rock mask.

16. The server according to any one of claims 11 to 15, wherein the rock size distribution is used to determine sieve-specific mass of rocks of the sample.

17. The server according to any one of claims 11 to 16, further comprising
a scaling unit configured to apply scaling to the image of the sample of rocks, wherein each pixel in the image is scaled to a spatial dimension.

**18.** A terminal device for determining a rock size distribution, comprising:

an acquisition unit configured to acquire, from a camera of the terminal device, an image of a sample of rocks;
a processor configured to use a neural network algorithm for the image to extract a rock mask for each rock present in the image, each rock mask indicating at least one contour; and
a determining unit configured to determine a rock size distribution of the sample using a physical scale being associated with the image.

**19.** The terminal device according to claim 18, wherein the terminal device is configured to perform error correction on the rock masks.

**20.** The terminal device according to claim 19, wherein, for the error correction, the terminal device is configured to find contours in each rock mask, and
if a first contour is found inside a second contour in a rock mask, the first contour is removed to cover a continuous surface by the second contour.

**21.** The terminal device according to claim 19 or 20, wherein, for the error correction, the terminal device is configured to find contours in each rock mask, and
if a plurality of contours is found adjacent to one another in a rock mask, the plurality of contours is merged to cover a continuous surface.

**22.** The terminal device according to any one of claims 18 to 21, wherein the terminal device is further configured to

determine all contours in a rock mask;
calculate first distances between all points being located on the determined contours;
determine a greatest distance among the first distances calculated for all the point being located on the determined contours, the greatest distance defining a longest axis of the rock indicated by the rock mask;
calculate, for all points being located on the determined contours, second distances between each point being located on the determined contours and each corresponding perpendicular projection point being located on the longest axis;
determine a first greatest distance among the second distances on one side of the longest axis and a second greatest distance among the second distances on the opposite side of the longest axis, the first greatest distance defining a first perpendicular axis and the second greatest distance defining a second perpendicular axis, the first perpendicular axis and the second perpendicular axis being perpendicular axes of the rock indicated by the rock mask.

**23.** The terminal device according to any one of claims 18 to 22, wherein the rock size distribution is used to determine sieve-specific mass of rocks of the sample.

**24.** The terminal device according to any one of claims 18 to 23, further comprising
a scaling unit configured to apply scaling to the image of the sample of rocks, wherein each pixel in the image is scaled to a spatial dimension.

**25.** The terminal device according to any one of claims 18 to 24,

wherein the acquisition unit is further configured to acquire a scaling map, the scaling map being taken from the sample of rocks;
wherein the terminal device is configured to determine further processing of the image based on the scaling map, the scaling map indicating the size of each pixel of the image in spatial dimension.

**26.** The terminal device according to claim 25, wherein the terminal device determines that further processing of the image is allowed if the scaling map indicates that a number of zones of the image with a valid scale value exceeds a predetermined threshold.

**27.** The terminal device according to claim 25 or 26,

wherein, if the terminal device determines that further processing of the image is rejected, the terminal device is configured to issue an alert to a user of the terminal device to move the camera in order to change the distance between the sample of rocks and the camera, and
wherein the acquisition unit acquires a new scaling map, the new scaling map being taken from the sample of rocks after the camera has been moved.

**28.** A computer program for determining a rock size distribution, the computer program comprising instructions which, when the program is executed by a computer, cause the computer to carry out the method of any one of claims 1 to 10.

**29.** A computer-readable storage medium for determining a rock size distribution, the computer-readable storage medium comprising instructions which, when executed by a computer, cause the computer to carry out the method of any one of claims 1 to 10.

**30.** A signal carrying a computer program in accordance with claim 28.

130
100
141
140
110
120

Fig. 1A

131
130
132
133
134
135

Fig. 1B

141
140
210
220
100
110
120

Fig. 2A

220
230
235

Fig. 2B

320
321
322
220
310
311

Fig. 3

220
410
Camera
440
Determination Unit
450
Transmission Unit
420
Acquisition Unit
460
Receiving Unit
430
Processor
470
Memory

Fig. 4

500
235
310
610
Acquisition Unit
640
Transmission Unit
620
Processor
650
Receiving Unit
630
Determination Unit
660
Memory

Fig. 5

Fig. 6

S701
Acquire an image of a sample of rocks
S702
Use a neural network to extract rock masks
S703
Determine a rock size distribution of the sample

Fig. 7

800A
855
850A
800A
855C
850C
800B
850B
900A
955
954
953
951
952
900A
955C
954C
953C
951C
952C
900B
950

Fig. 8A Fig. 8B Fig. 8C

Fig. 9A Fig. 9B Fig. 9C

S1010
Acquire an image of a sample of rocks
S1020
Use a neural network to extract rock masks
S1030
Determine all contours in every rock mask
S1040
Determine a longest axis of each rock indicated by the rock masks
S1050
Determine two perpendicular axes of each rock indicated by the rock masks
S1060
Calculate a third dimension of each rock indicated by the rock masks
S1070
Calculate a volume of each rock indicated by the rock masks

FIG. 10A

S1041
Calculate first distances between all points located on the contours
S1042
Determine a greatest distance among the first distances
S1043
Set the greatest distance as the longest axis in the rock mask

FIG. 10B

S1051
Calculate for all points located on the contours second distances between each point located on the contours and each corresponding perpendicular projection point being located on the longest axis
S1052
Determine a first greatest distance among the second distances on one side of the longest axis
S1053
Determine a second greatest distance among the second distances on the opposite side of the longest axis
S1054
Set the first greatest distance as a first perpendicular axis and the second greatest distance as a second perpendicular axis

FIG. 10C

Fig. 11A
1110
1111
1120
1121
1122
1123
1124
1125
Fig. 11B
P1
P2
P3
P4
P5
D12
D13
D25
D34
P6
P7
P8
D24
D56
D78
Fig. 11C
PP1
PP2
PP3
PP4
PP'1
PP'2
PP'3
PP'4
Fig. 11D

100%
80%
60%
40%
20%
0%
1mm
10mm
100mm
mesh size of sieves
[mm]

Fig. 12A

100%
80%
60%
40%
20%
0%
1mm
10mm
100mm
1000mm
mesh size of sieves
[mm]

Fig. 12B

Start
1310
Obtain sample of rocks
1320
Obtain rock size distribution of sample of rocks
1330
Set configuration parameters based on rock size distribution by referring to data indicating relationship between configuration parameters and rock size distribution
1340
Crush sample of rocks
1350
Analyse crushed sample of rocks
1360
Characteristics of crushed Sample of rocks as desired?
NO
YES
End
1380
Discard sample of rocks and adapt data indicating relationship between configuration parameters and rock size distribution
1390
Adapt data indicating relationship bertween configuration parameters and rock size distribution
1370
NO
YES
Rock size in sample of rocks smaller than desired?

Fig. 13

| 1 | 1 | 1 | 1 | 1 | 1 |
|---|---|---|---|---|---|
| 1 | 1 | 1 | 1 | 1 | 1 |
| 2 | 2 | 2 | 3 | 3 | 3 |
| 3 | 3 | 2 | 2 | 2 | 2 |
| 0 | 2 | 2 | 2 | 2 | 2 |

Fig. 14A

| 1 | 1 | 1 | 1 | 1 | 1 |
|---|---|---|---|---|---|
| 1 | 1 | 0 | 0 | 1 | 1 |
| 0 | 0 | 0 | 3 | 3 | 3 |
| 3 | 3 | 2 | 2 | 2 | 2 |
| 0 | 0 | 2 | 2 | 2 | 2 |

Fig. 14B

Europäisches
Patentamt
European
Patent Office
Office européen
des brevets

# EUROPEAN SEARCH REPORT

Application Number
EP 19 30 6016

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ZHENGYU LIANG ET AL: "A particle shape extraction and evaluation method using a deep convolutional neural network and digital image processing", POWDER TECHNOLOGY - ELECTROSTATIC PHENOMENA IN PARTICULATE PROCESSES, vol. 353, 1 July 2019 (2019-07-01), pages 156-170, XP055649431, Basel (CH) ISSN: 0032-5910, DOI: 10.1016/j.powtec.2019.05.025 | 1-8, 11-25, 28-30 | INV. G06T7/00 |
| A | * abstract * * figures 1,9-16,18(a),20 * * sections 2, 3, 5.1 * ----- | 9,10,26, 27 | |
| Y,D | Ken Cheng: "Optical gradation for crushed limestone aggregates", West Virginia University Libraries, 1 January 2001 (2001-01-01), XP055649046, Retrieved from the Internet: URL:https://researchrepository.wvu.edu/etd/2318 [retrieved on 2019-12-04] * sections 3.1, 3.2, 3.4, 4.1-4.6, 6.2, 8.2 * * figures 3.2,3.3,4.11,5.10,8.2, 8.3, 8.4 * ----- | 1-8, 11-25, 28-30 | TECHNICAL FIELDS SEARCHED (IPC): G06T |

-/--

The present search report has been drawn up for all claims

| Place of search | Date of completion of the search | Examiner |
|---|---|---|
| Munich | 12 February 2020 | Eveno, Nicolas |

3

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# EUROPEAN SEARCH REPORT

Application Number
EP 19 30 6016

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Simphiwe Mkwelo: "A machine vision-based approach to measuring the size distribution of rocks on a conveyor belt", , 1 May 2004 (2004-05-01), XP055649451, Retrieved from the Internet: URL:https://www.dip.ee.uct.ac.za/publications/theses/MScSimphiwe.pdf [retrieved on 2019-12-04] * sections 2.2, 6, 8.2, 8.3.1 * * figures 2.1, 8.1, 8.2, 8.13 * | 1-8, 11-25, 28-30 | |
| A | Satya Mallick: "Filling holes in an image using OpenCV ( Python / C++ ) ¦ Learn OpenCV", , 20 April 2018 (2018-04-20), XP055649386, Retrieved from the Internet: URL:https://web.archive.org/web/20180420085202/https://www.learnopencv.com/filling-holes-in-an-image-using-opencv-python-c/ [retrieved on 2019-12-04] * the whole document * | 1-4, 11-14, 18-21, 28-30 | TECHNICAL FIELDS SEARCHED (IPC) |
| Y | Weixing Wang: "Rock Particle Image Segmentation and Systems" In: "Pattern Recognition Techniques, Technology and Applications", 1 November 2008 (2008-11-01), InTech, XP055649461, ISBN: 978-953-76-1924-4 DOI: 10.5772/6242, * section 3.2 * * figure 9 * | 4,14,21 | |

-/--

The present search report has been drawn up for all claims

| Place of search | Date of completion of the search | Examiner |
|---|---|---|
| Munich | 12 February 2020 | Eveno, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# EUROPEAN SEARCH REPORT

Application Number
EP 19 30 6016

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | HAEHN DANIEL ET AL: "Guided Proofreading of Automatic Segmentations for Connectomics", 2018 IEEE/CVF CONFERENCE ON COMPUTER VISION AND PATTERN RECOGNITION, IEEE, 18 June 2018 (2018-06-18), pages 9319-9328, XP033473858, DOI: 10.1109/CVPR.2018.00971 [retrieved on 2018-12-14] * figure 1 * * section 3.1 * ----- | 4,14,21 | |
| Y | John Franklin ET AL: "Measurement of Blast Fragmentation" In: "Measurement of Blast Fragmentation", 1 January 1996 (1996-01-01), CRC Press, XP055667884, ISBN: 978-90-54-10845-0 pages 25-26, * the whole document * ----- | 5,15,22 | |
| A | Norbert H Maerz: "Image sampling techniques and requirements for automated image analysis of rock fragmentation" In: "Image sampling techniques and requirements for automated image analysis of rock fragmentation", 23 August 1996 (1996-08-23), CRC Press, XP055667892, ISBN: 978-90-54-10845-0 pages 115-120, DOI: 10.1201/9780203747919-18, * abstract * * sections 5.2, 7 * ----- | 7-10,17, 24-27 | TECHNICAL FIELDS SEARCHED (IPC) |

The present search report has been drawn up for all claims

3

| Place of search | Date of completion of the search | Examiner |
|---|---|---|
| Munich | 12 February 2020 | Eveno, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches
Patentamt
European
Patent Office
Office européen
des brevets

Application Number

EP 19 30 6016

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt
European
Patent Office
Office européen
des brevets

# LACK OF UNITY OF INVENTION SHEET B

Application Number
EP 19 30 6016

The Search Division considers that the present European patent application does not comply with the requirements of unity of invention and relates to several inventions or groups of inventions, namely:

1. claims: 1-4, 11-14, 18-21, 28-30

   segmentation of rocks in a rock image analysis

   ---

2. claims: 5, 6, 15, 16, 22, 23

   rock size quantifications in a rock image analysis

   ---

3. claims: 7-10, 17, 24-27

   image scaling in a rock image analysis

   ---

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **KEN CHENG.** *Optical Gradation for Crushed Limestone Aggregates,* 08 September 2015, 85-86